# EUROPEAN PATENT SPECIFICATION

(11) **EP 2 518 962 B1**
(45) Date of publication and mention of the grant of the patent: **05.06.2013**
(21) Application number: 11164185.8
(22) Date of filing: 28.04.2011
(51) Int. Cl.: H04L 27/26, H04H 40/18

(54) **Method of receiving a digital broadcast signal**
Verfahren zum Empfang eines digitalen Rundfunksignals
Procédé pour la réception d'un signal de diffusion numérique

(43) Date of publication of application: 31.10.2012
(73) Proprietor: Himax Media Solutions, Inc., Tainan County 74148 (TW)
(72) Inventor: Lee, Sheng-Lung, 74148, Tainan City (TW)
(74) Representative: Karakatsanis, Georgios

(56) References cited:
- KR-A- 20090 043 756
- "Digital Video Broadcasting (DVB); Implementation guidelines for a second generation digital terrestrial television broadcasting system (DVB-T2)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. BROADCAS, no. V1.1.1, 1 October 2010 (2010-10-01), XP014061392,
- ZEWEN SHI ET AL: "A joint mode detection and coarse symbol synchronization scheme for DVB-H", ASIC, 2009. ASICON '09. IEEE 8TH INTERNATIONAL CONFERENCE ON, IEEE, PISCATAWAY, NJ, USA, 20 October 2009 (2009-10-20), pages 979-982, XP031579128, ISBN: 978-1-4244-3868-6
- DVB ORGANIZATION: "P1 symbol.ppt", DVB, DIGITAL VIDEO BROADCASTING, C/O EBU - 17A ANCIENNE ROUTE - CH-1218 GRAND SACONNEX, GENEVA - SWITZERLAND, 29 October 2007 (2007-10-29), XP017817563,

## Description

### BACKGROUND OF THE INVENTION

### 1. FIELD OF THE INVENTION

The present invention generally relates to a digital television standard, and more particularly to a method of receiving a Digital Video Broadcasting-Terrestrial second generation (DVB-T2) signal.

### 2. DESCRIPTION OF RELATED ART

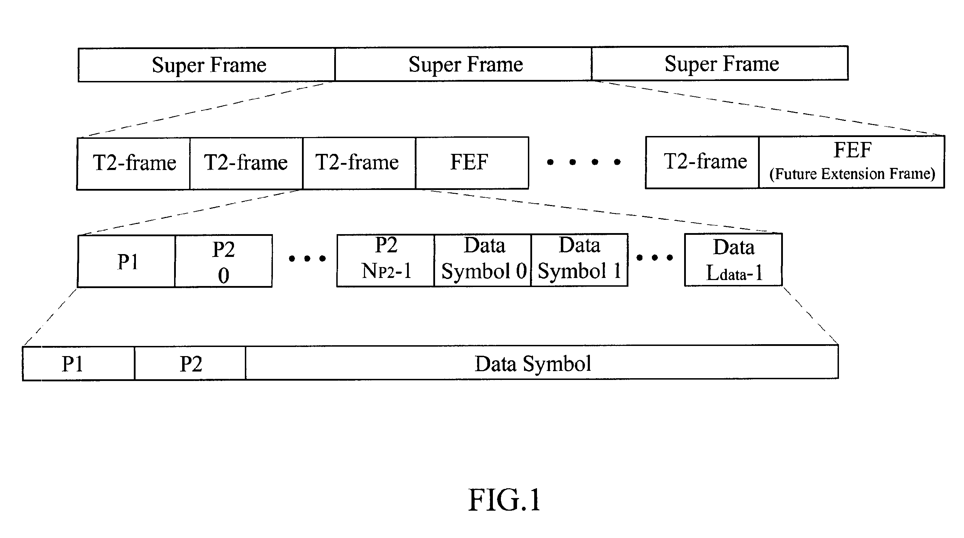

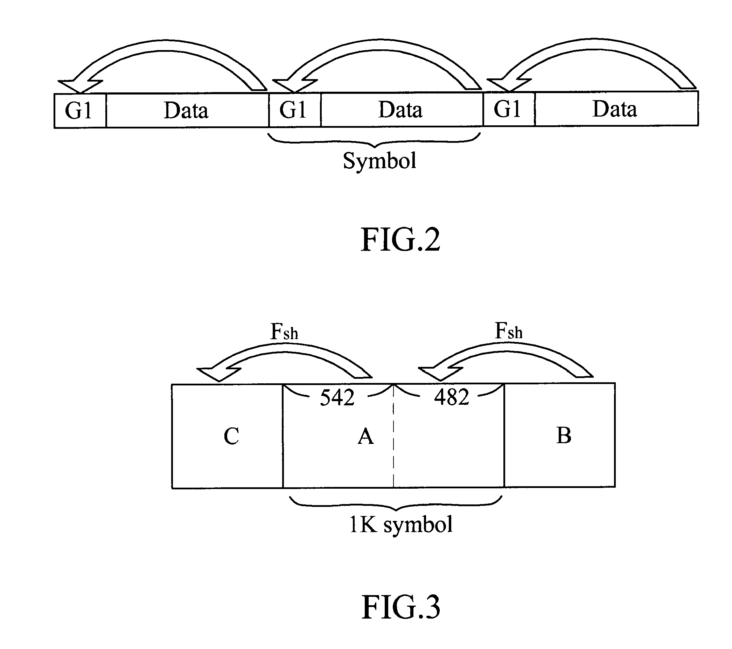

Digital Video Broadcasting-Terrestrial second generation (DVB-T2) is a digital terrestrial television standard, which is an extension of Digital Video Broadcasting-Terrestrial (DVB-T). FIG. 1 shows a DVB-T2 frame structure, in which each T2 frame is composed of a P1 symbol at the head of each T2 frame, followed by at least one P2 symbol and some data symbols. Each T2 symbol is compliant with orthogonal frequency-division multiplexing (OFDM), and is commonly called OFDM symbol. The T2 symbol has six available OFDM modes: 1K, 2K, 4K, 8K, 16K and 32K (indicating respective discrete Fourier transform size), compared to two available OFDM modes (2K and 8K) in DVB-T. In a coded OFDM system such as DVB-T2, guard interval (GI) is used to prevent adjacent symbols from interfering with one another. FIG. 2 shows some T2 symbols, each of which is preceded by a guard interval that is a replica of a (last) portion of its own symbol. In DVB-T2, seven guard intervals (denoted as fractions of a symbol period) are available: 1/128, 1/32, 1/16, 19/256, 1/8, 19/128 and 1/4, compared to four available guard intervals (1/32, 1/16, 1/8 and 1/4) in DVB-T. It is noted that a larger guard interval (e.g., 1/4) has better interference protection but lower data rate, and vice versa.

The P1 symbol of the T2 frame is primarily devoted to fast synchronization at a receiver. As DVB-T frame (i.e., T frame) or the frame in other systems has no such P1 symbol, the P1 symbol thus can be used to recognize a T2 signal, and to differentiate the T2 signal from a T signal. FIG. 3 schematically shows a P1 symbol, which is constructed based on 1K symbol (designated "A") with a frequency shifted replica (designated as "C") of a first half portion (with 542 samples long) of the 1K symbol disposed at front of the P1 symbol, and a frequency shifted replica (designated as "B") of a second half portion (with 482 samples long) of the 1K symbol disposed at rear of the P1 symbol. According to this structure, T2 signal with frequency offset up to ±500kHz can still be locked in the receiver.

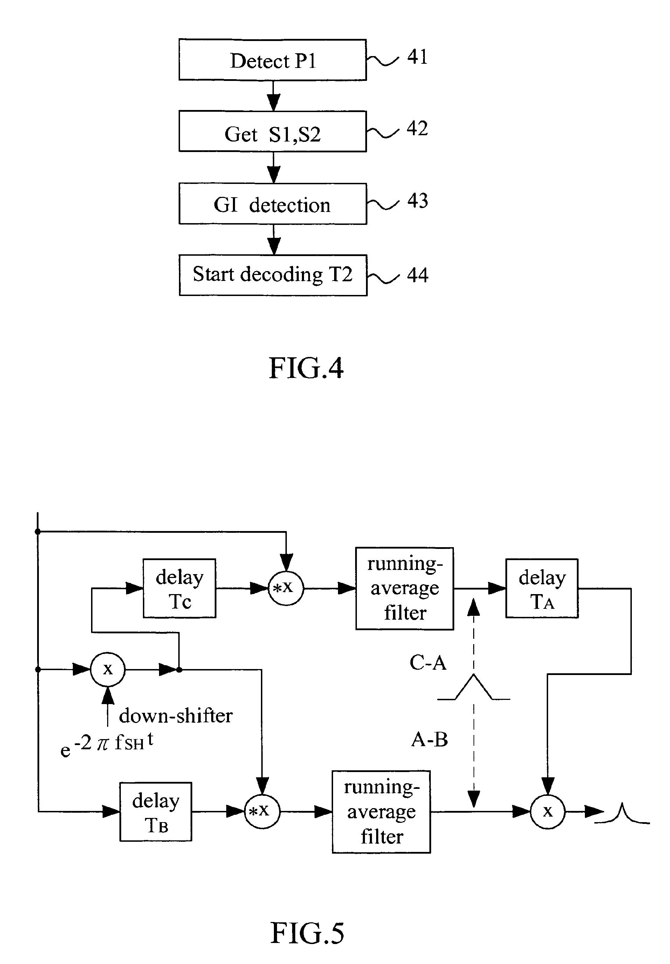

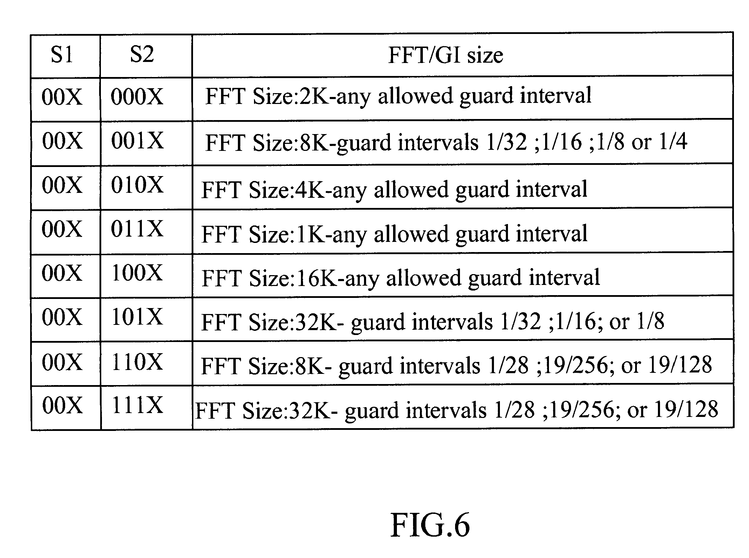

FIG. 4 shows a simplified flow diagram illustrative of a conventional method of receiving a T2 signal. After the detection of P1 symbol (step 41), S1 field (3 bits) and S2 field (4 bits) of the P1 symbol are obtained (step 42). Specifically, as the P1 symbol as shown in FIG. 3 has a structure similar to the guard interval, a conventional guard-interval correlation technique may be applied in detecting the P1 symbol. FIG. 5 shows a modified guard-interval correlation method for detecting the P1 symbol. In the figure, Tc is 542, T_{B} is 482, and T_{A} is 1024. FIG. 6 shows a table that lists the obtained S1 and S2 fields of valid T2 signals, indicating Fourier transform (FT) sizes (or fast Fourier transform (FFT) sizes) and guard intervals of T2 symbols. Generally speaking, S1 field indicates single-input-single-output (SISO) when S1=000 and indicates multi-input-single-output (MISO) when S1=001; first three bits of S2 field indicate FT size, based on which the receiver can determine guard interval and decode subsequent symbols. Subsequently, in step 43, a guard interval (GI) buffer should be used to get GI information, which is required to get P2 symbol and data symbols. Specifically, GI detection is conventionally performed by using delay correlation technique (e.g., sum of autocorrelation (SoAC)) on different GI ratios. Maximum peaks of SoAC on different GI ratios are found and compared to obtain GI ratio. Finally, the flow waits until next P1 symbol to start decoding T2 signal (step 44).

With respect to the conventional method of receiving T2 signal as discussed above, time required for scanning a channel is the T2 frame duration, that is, 150-250ms, and waiting time in step 44 is typically at least 150-250ms. Further, substantive buffer storage is required in the GI detection (step 43). For the worse, the GI detection using the GI buffer ordinarily results in time-frequency offset (TFO) recovery latency, which influences TFO ability.

"Digital Video Broadcasting (DVB) ; Implementation guidelines for a second generation digital terrestrial television broadcasting system (DVB-T2)" gives guidelines for the implementation of aspects of the DVB-T2. Korean Patient Publication No. 2009 0043756 entitled "Received Signal Information Detecting Apparatus and a Method for Obtaining the Early Knowledge for the Fast Fourier Transform Process" discloses a scheme of detecting the frame synchronization, the fraction times frequency offset, the minute frame synchronization, and the sampling frequency offset. DVB ORGANIZATION: "P1 symbol. ppt", DVB, Digital Video Broadcasting, C/O EBU - 17A Ancienne Route - CH-1218 Grand Saconnex, Geneva-Switzerland, 29 October 2007 (2007-10-29), XP017817563 discloses the usage of P1 pilot symbol for initial scan. For the reason that conventional method could not effectively receive T2 signal, a need has arisen to propose a novel method that not only speeds up the process but also prevents from TFO latency.

### SUMMARY OF THE INVENTION

In view of the foregoing, it is an object of the embodiment of the present invention to provide a fast method of receiving a Digital Video Broadcasting-Terrestrial second generation (DVB-T2) signal without incurring time-frequency offset (TFO) recovery latency.

According to one embodiment, Fourier transform (FT) size detection is performed on a data symbol of a received signal to obtain an associated FT size, and Guard interval (GI) detection is then performed on the data symbol according to the obtained FT size, thereby obtaining an associated GI ratio. A synchronization symbol (such as P1 symbol of DVB-T2) detection is subsequently performed on the received signal according to the obtained FT size and the obtained GI ratio.

### BRIEF DESCRIPTION OF THE DRAWINGS

FIG. 1 shows a DVB-T2 frame structure;
FIG. 2 shows some T2 symbols, each of which is preceded by a guard interval;
FIG. 3 schematically shows a P1 symbol;
FIG. 4 shows a simplified flow diagram illustrative of a conventional method of receiving a T2 signal;
FIG. 5 shows a modified guard-interval correlation method for detecting the P1 symbol;
FIG. 6 shows a table that lists the obtained S1 and S2 fields of valid T2 signals;
FIG. 7 shows a flow diagram illustrative of a method of receiving a DVB-T2 signal (abbreviated as T2 signal herein after) according to one embodiment of the present invention;
FIG. 8 schematically shows frame structures of six available FT sizes in DVB-T2;
FIG. 9 shows a block diagram illustrating exemplary delay correlation on OFDM symbols of six TF sizes;
FIG. 10 schematically shows GI structures of seven available GIs; and
FIG. 11 shows a block diagram illustrating exemplary delay correlation on various GI ratios.

### DETAILED DESCRIPTION OF THE INVENTION

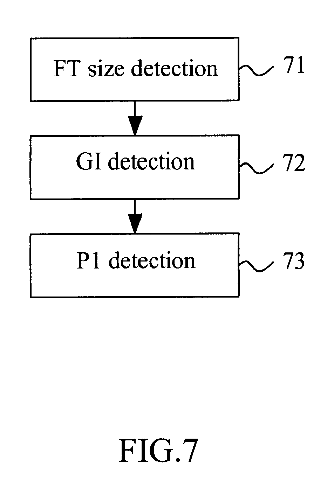

FIG. 7 shows a flow diagram illustrative of a method of receiving a Digital Video Broadcasting-Terrestrial second generation (DVB-T2) signal (abbreviated as T2 signal hereinafter) according to one embodiment of the present invention. Although DVB-T2 is exemplified in the embodiment, the present invention can be adapted to a receiver in a communication system characterized by a feature similar to DVB-T2.

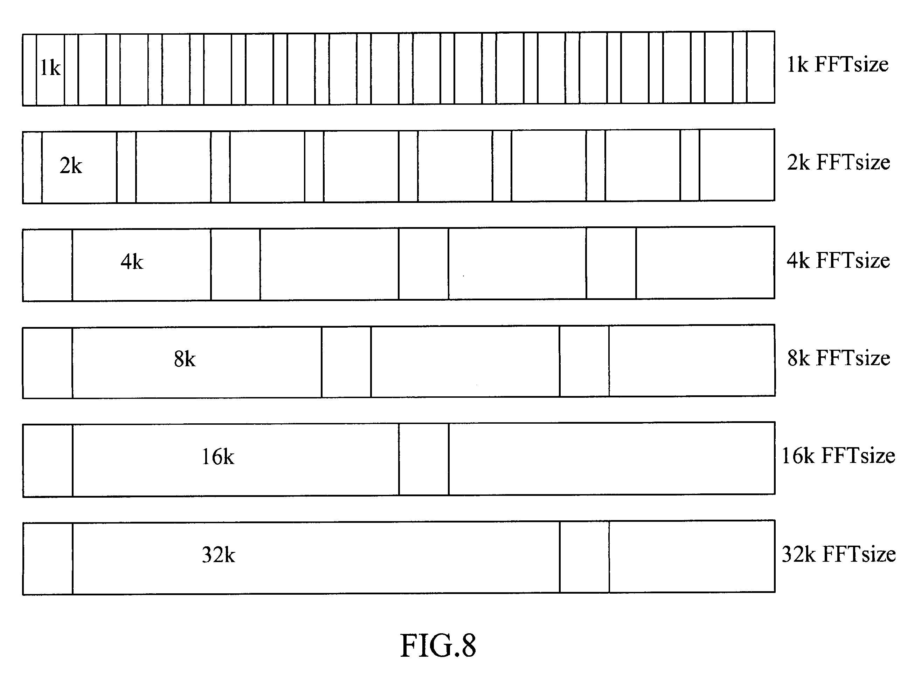

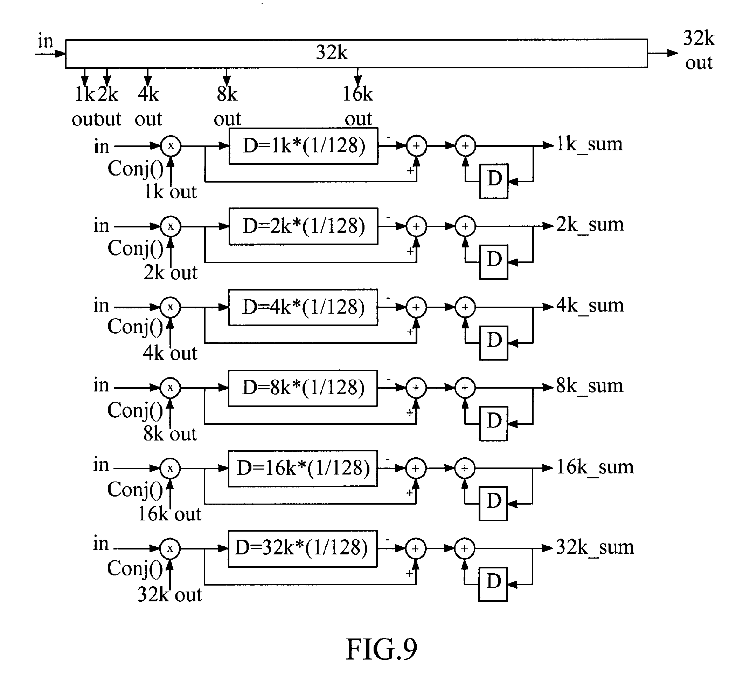

In step 71, a received signal is subjected to Fourier transform (FT) size detection in order to obtain an associated FT size (or FFT size). In the specification and drawings, the terms "FT size" and "FFT size" are interchangeably used. FIG. 8 schematically shows frame structures of six available FT sizes (1K, 2K, 4K, 8K, 16K and 32K) corresponding to six available OFDM modes mentioned above. In the embodiment, the FT size detection (i.e., step 71) may be performed by, but not limited to, carrying out delay correlation on OFDM symbols of each FT size. FIG. 9 shows a block diagram illustrating exemplary delay correlation on OFDM symbols of FT sizes 1K, 2K, 4K, 8K, 16K and 32K. It is especially noted that the first step (i.e., step 71) of the present embodiment performs detection generally on OFDM data symbols rather than on P1 symbol as in step 41 of the conventional method. As P1 symbol makes up less than 1% of an entire T2 frame, the conventional method commonly needs to wait for T2 frame duration of 150-250ms before finding out the P1 symbol. On the other hand, as data symbols make up more than 99% of an entire T2 frame, the present embodiment doe not need to wait for the T2 frame duration.

The associated FT size of the received signal may thus be obtained when the delay correlation (e.g., FIG. 9) on the OFDM symbols results in a maximum value (for example, among 1k_sum, 2k_sum, 4k_sum, 8k_sum, 16k_sum and 32k_sum in FIG. 9) that is greater than a predetermined threshold. If there is no value being greater than the predetermined threshold, another channel is scanned and the step 71 is performed again. It is noted that the FT size detection for each channel takes substantially less than the T2 frame duration of 150-250ms.

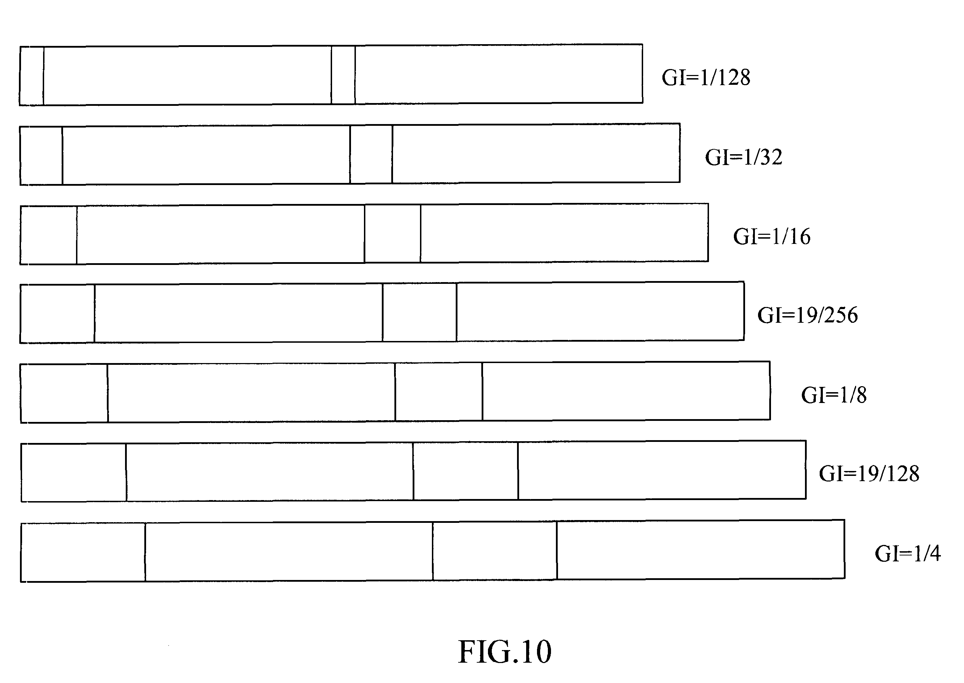

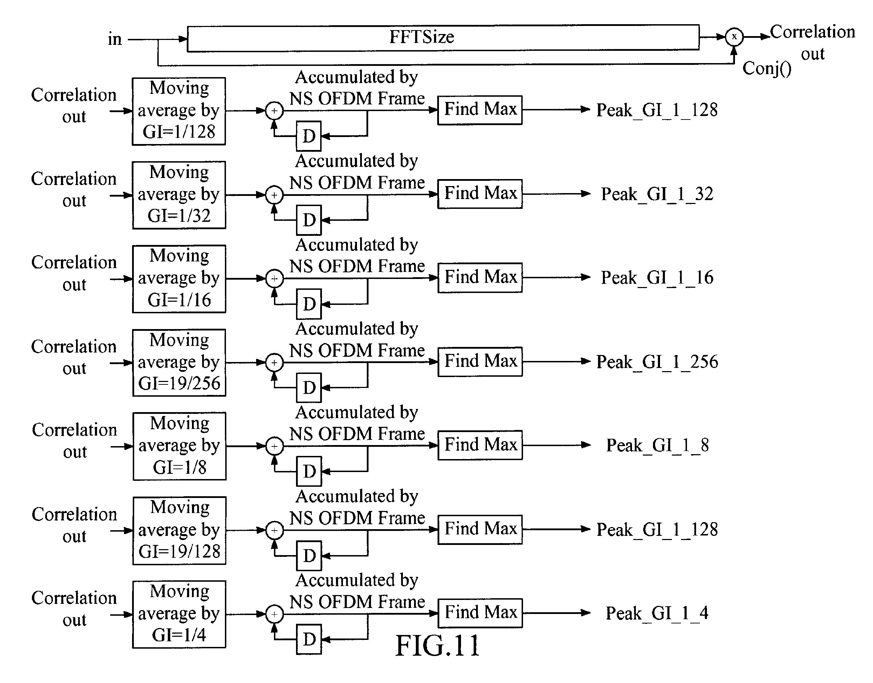

Upon obtaining the FT size, the flow proceeds to step 72, in which guard interval (GI) detection is performed according to the obtained FT size. FIG. 10 schematically shows GI structures of seven available GI ratios (denoted as fractions of a symbol period): 1/128, 1/32, 1/16, 19/256, 1/8, 19/128 and 1/4. In the embodiment, the GI detection (i.e., step 72) may be performed by, but not limited to, carrying out delay correlation, such as sum of autocorrelation (SoAC), on different GI ratios. FIG. 11 shows a block diagram illustrating exemplary delay correlation on GI ratios of 1/128, 1/32, 1/16, 19/256, 1/8, 19/128 and 1/4. Maximum peaks (for example, Peak_GI_1_128, Peak_GI_1_32, Peak_GI_1_16, Peak_GI_19_256, Peak_GI_1_8, Peak_GI_19_128 and Peak_GI_1_4 in FIG. 11) of the delay correlation (e.g., SoAC) on different GI ratios are found and compared to obtain an associated GI ratio. It is especially noted that the GI detection of the present embodiment does not need substantive GI buffer as in the conventional method (step 43 in FIG. 4), and hence no time-frequency offset (TFO) recovery latency will occur.

The associated GI ratio of the received signal may thus be obtained when the delay correlation (e.g., FIG. 11) on different GI ratios results in a maximum value that is greater than a predetermined threshold. If there is no value being greater than the predetermined threshold, another channel is scanned and the step 72 is performed again. It is noted that the GI detection for each channel takes substantially less than the T2 frame duration of 150-250ms.

Upon obtaining the GI ratio, the T2 signal can be uniquely recognized according to the obtained FT size and the GI ratio, and the flow proceeds to step 73, in which P1 symbol detection is performed according to the obtained FT size and GI ratio. Specifically, in step 73, the received signal is firstly transformed into frequency domain, for example, by fast Fourier transform (FFT), followed by carrying out carrier distribution sequence (CDS) correlation. As the FT size and the GI ratio are known at this stage, the CDS correlation in step 73 requires only a small set of CDS patterns corresponding to only, for example, S1 field for determining SISO or MISO or S2 field for determining whether the T2 signal is mixed. On the other hand, the P1 symbol detection (step 41, FIG. 4) in the conventional method carries out CDS correlation that requires a complete set of substantially amount of CDS patterns for the reason that neither FT size nor GI ratio has been known. According to the embodiment, the P1 symbol detection of the present embodiment can save substantial time compared to the conventional counterpart. Moreover, as the FT size detection (step 71) and the GI detection (72) normally take less than 10% of entire T2 frame duration, it is probable that the P1 symbol detection (step 73) may be performed on the same frame as steps 71/72 without waiting for next frame as in step 44 (FIG. 4) of the conventional method, thereby speeding up the flow of receiving a T2 signal.

Although specific embodiments have been illustrated and described, it will be appreciated by those skilled in the art that various modifications may be made without departing from the scope of the present invention, which is intended to be limited solely by the appended claims.

## Claims

1. A method of receiving a digital broadcast signal of a Digital Video Broadcasting-Terrestrial second generation, DVB-T2, comprising **characterized in that** the method comprises:
performing Fourier transform size detection on a data symbol of the received signal to obtain an associated Fourier transform size (71);
performing guard interval detection on the data symbol according to the obtained Fourier transform size, thereby obtaining an associated guard interval ratio (72); and
performing a P1 symbol detection on the received signal according to the obtained Fourier transform size and the obtained guard interval ratio (73).

2. The method of claim 1, wherein the Fourier transform size detection step comprises:
carrying out delay correlation on the data symbol of each available Fourier transform size.

3. The method of claim 2, wherein the associated Fourier transform size is obtained when the delay correlation results in a maximum value that is greater than a predetermined threshold.

4. The method of claim 3, wherein the Fourier transform size detection step is performed again on another channel when the delay correlation results in a maximum value that is less than the predetermined threshold.

5. The method of claim 1, wherein the guard interval detection step comprises:
carrying out delay correlation on a plurality of guard interval ratios.

6. The method of claim 5, in the step of carrying out the delay correlation, a plurality of maximum peaks of the delay correlation are found and then compared to obtain the associated guard interval ratio.

7. The method of claim 6, wherein the associated guard interval ratio is obtained when the delay correlation results in a maximum value that is greater than a predetermined threshold.

8. The method of claim 7, wherein the guard interval detection step is performed again on another channel when the delay correlation results in a maximum value that is less than the predetermined threshold.

9. The method of claim 1, wherein the P1 symbol detection step comprises:
transforming the P1 symbol of the received signal into frequency domain; and
carrying out carrier distribution sequence correlation on the transformed received signal.

10. The method of claim 9, wherein the carrier distribution sequence correlation uses a set of carrier distribution sequence pattern corresponding to only S1 field or only S2 field compliant with DVB-T2 standard.

## Patentansprüche

1. Verfahren zum Empfang eines digitalen Rundfunksignals von einem Video Broadcasting-Terrestrial der zweiten Generation, DVB-T2, umfassend **dadurch gekennzeichnet, dass** das Verfahren umfasst:
Ausführen einer Fouriertransformations-Größenermittlung an einem Datensymbol des empfangenen Signals, um eine zugeordnete Fouriertransformationsgröße zu erhalten (71);
Ausführen einer Schutzintervallermittlung an dem Datensymbol entsprechend der erhaltenen Fouriertransformationsgröße, wodurch ein zugeordnetes Schutzintervallverhältnis erhalten wird (72); und
Ausführen einer P1-Symbolerkennung an dem empfangenen Signal entsprechend der erhaltenen Fouriertransformationsgröße und des erhaltenen Schutzintervallverhältnisses (73).

2. Verfahren nach Anspruch 1, wobei der Fouriertransformationsgrößen-Ermittlungsschritt umfasst:
Durchführen einer Verzögerungskorrelation an dem Datensymbol einer jeden verfügbaren Fouriertransformationsgröße.

3. Verfahren nach Anspruch 2, wobei die zugeordnete Fouriertransformationsgröße erhalten wird, wenn die Verzögerungskorrelation einen Maximalwert ergibt, der größer als ein vorgegebener Schwellenwert ist.

4. Verfahren nach Anspruch 3, wobei der Fouriertransformationsgrößen-Ermittlungsschritt noch einmal auf einem weiteren Kanal ausgeführt wird, wenn die Verzögerungskorrelation einen Maximalwert ergibt, der kleiner als der vorgegebene Schwellenwert ist.

5. Verfahren nach Anspruch 1, wobei der Schutzintervallermittlungsschritt umfasst:
Durchführen einer Verzögerungskorrelation an mehreren Schutzintervallverhältnissen.

6. Verfahren nach Anspruch 5, wobei in dem Schritt zum Ausführen der Verzögerungskorrelation mehrere maximale Scheitelwerte gefunden und dann verglichen werden, um das zugeordnete Schutzintervallverhältnis zu erhalten.

7. Verfahren nach Anspruch 6, wobei das zugeordnete Schutzintervallverhältnis erhalten wird, wenn die Verzögerungskorrelation einen Maximalwert ergibt, der größer als ein vorgegebener Schwellenwert ist.

8. Verfahren nach Anspruch 7, wobei der Schutzintervallermittlungsschritt noch einmal auf einem weiteren Kanal ausgeführt wird, wenn die Verzögerungskorrelation einen Maximalwert ergibt, der kleiner als der vorgegebene Schwellenwert ist.

9. Verfahren nach Anspruch 1, wobei der P1-Symbolerkennungsschritt umfasst:
Transformieren des P1-Symbols des empfangenen Signals in den Frequenzbereich; und
Ausführen der Trägerverteilungs-Sequenzkorrelation am transformierten empfangenen Signal.

10. Verfahren nach Anspruch 9, wobei die Trägerverteilungs-Sequenzkorrelation einen Satz von Trägerverteilungs-Sequenzmustern verwendet, die gemäß dem DVB-T2 Standard nur dem S1-Feld oder nur dem S2-Feld entsprechen.

## Revendications

1. Procédé de réception d'un signal de diffusion numérique DVB-T2 (Digital Video Broadcasting-Terrestrial second generation), **caractérisé en ce que** le procédé comprend :
l'exécution d'une détection de taille de transformée de Fourier sur un symbole de données du signal reçu pour obtenir une taille de transformée de Fourier associée (71) ;
l'exécution d'une détection d'intervalle de garde sur le symbole de données en fonction de la taille de transformée de Fourier obtenue, en obtenant de ce fait un rapport d'intervalle de garde associé (72) ; et
l'exécution d'une détection de symbole P1 sur le signal reçu en fonction de la taille de transformée de Fourier obtenue et du rapport d'intervalle de garde obtenu (73).

2. Procédé selon la revendication 1, dans lequel l'étape de détection de taille de transformée de Fourier comprend :
l'exécution d'une corrélation de retard sur le symbole de données de chaque taille de transformée de Fourier disponible.

3. Procédé selon la revendication 2, dans lequel la taille de transformée de Fourier associée est obtenue lorsque la corrélation de retard engendre une valeur maximale qui est supérieure à un seuil prédéterminé.

4. Procédé selon la revendication 3, dans lequel l'étape de détection de taille de transformée de Fourier est effectuée à nouveau sur un autre canal lorsque la corrélation de retard engendre une valeur maximale qui est inférieure au seuil prédéterminé.

5. Procédé selon la revendication 1, dans lequel l'étape de détection d'intervalle de garde comprend :
l'exécution d'une corrélation de retard sur une pluralité de rapports d'intervalle de garde.

6. Procédé selon la revendication 5, dans lequel, à l'étape d'exécution de la corrélation de retard, une pluralité de crêtes maximales de la corrélation de retard sont trouvées puis comparées pour obtenir le rapport d'intervalle de garde associé.

7. Procédé selon la revendication 6, dans lequel le rapport d'intervalle de garde associé est obtenu lorsque la corrélation de retard engendre une valeur maximale qui est supérieure à un seuil prédéterminé.

8. Procédé selon la revendication 7, dans lequel l'étape de détection d'intervalle de garde est effectuée à nouveau sur un autre canal lorsque la corrélation de retard engendre une valeur maximale qui est inférieure au seuil prédéterminé.

9. Procédé selon la revendication 1, dans lequel l'étape de détection de symbole P1 comprend :
la transformation du symbole P1 du signal reçu dans le domaine de fréquence ; et
l'exécution d'une corrélation de séquence de distribution de porteuse sur le signal reçu transformé.

10. Procédé selon la revendication 9, dans lequel la corrélation de séquence de distribution de porteuse utilise un ensemble de motifs de séquence de distribution de porteuse correspondant uniquement au champ S1 ou uniquement au champ S2 conformément à la norme DVB-T2.
